# EUROPÄISCHE PATENTSCHRIFT

(11) **EP 1 917 849 B1**
(45) Veröffentlichungstag und Bekanntmachung des Hinweises auf die Patenterteilung: **06.10.2010**
(21) Anmeldenummer: 07118984.9
(22) Anmeldetag: 22.10.2007
(51) Int. Cl.: A01F 15/07

(54) **Umhüllungsvorrichtung**
Sheathing device
Dispositif d'enveloppement

(30) Priorität: 31.10.2006 DE 102006051273
(43) Veröffentlichungstag der Anmeldung: 07.05.2008
(73) Patentinhaber: Deere & Company, Moline, IL 61265-8098 (US)
(72) Erfinder: Paillet, Frédéric, 70100, Gray (FR); Delphigue, Didier, 21000, Dijon (FR)
(74) Vertreter: Magin, Ludwig Bernhard

(56) Entgegenhaltungen:
- WO-A-2006/043127
- US-A- 4 703 605

## Beschreibung

Die Erfindung betrifft eine Umhüllungsvorrichtung in einer Rundballenpresse mit einem ersten Hüllmittel und mit wenigstens einem zweiten Hüllmittel, die wenigstens während eines Teils eines Umhüllungszyklus zusammen in eine Ballenbildungskammer eingespeist werden.

Es ist aus der US 4 703 605 bekannt, Folie und Netz gleichzeitig in eine Ballenbildungskammer einzuspeisen, wozu jeweils eine Zuführvorrichtung vorgesehen ist.

Bei einer Vorrichtung nach der EP 1 321 028 wird ebenfalls ein Rundballen sowohl mit Netz als auch mit Folie umhüllt, wobei offen bleibt, wie die abwechselnden Lagen aufgebracht werden.

Gemäß der WO 2004/060768 A1 wird eine einzige Bahn eines Hüllmittels zugeführt, bei der Netz- und Folienabschnitte miteinander verbunden sind.

Die US 6 796 109 B2 lehrt, in einer Rundballenpresse eine Rolle mit Folie oder Netz für den Wickelvorgang zu benutzen und daneben eine Rolle als Vorrat zu lagern.

Das der Erfindung zugrunde liegende Problem wird darin gesehen, dass zusätzliches Hüllmittel nicht mit geringem Aufwand und nicht nach Belieben zugeführt werden kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden verschiedene Arten von Hüllmittel bereit gehalten, um wahlweise eingesetzt werden zu können, wobei zum Zweck der gemeinsamen Zuführung beide miteinander verbunden werden und somit das sowieso geförderte Hüllmittel das zusätzliche Hüllmittel mitnimmt. Die Verbindung beider Hüllmittel kann sowohl aufgrund deren Oberflächenbeschaffenheit ohne, als auch mit zusätzlichen Mitteln, z.B. Klebern, Klammern, Perforationen und dergleichen erfolgen. Wichtig ist dabei, dass nicht immer beide Hüllmittel in die Ballenbildungskammer geführt werden müssen und dass es keiner zusätzlichen Zuführkanäle oder dergleichen bedarf. Vorzugsweise sind beide Rollen nebeneinander gelagert, was aber nicht ausschließt, dass sie sich an ganz unterschiedlichen Stellen befinden und erst in der Nähe des Eintritts zur Ballenbildungskammer zusammen kommen.

Die Verwendung derselben Zuführvorrichtung, z.B. Zuführrollen, Greifer etc. hat den Vorteil, dass der technische Aufwand gering gehalten wird.

Auf die jeweiligen Einsatzverhältnisse kann optimal reagiert werden, wenn die entsprechenden Kombinationen an Hüllmittel, z.B. Folie, Netz, Garn bevorratet werden. Dort wo es Sinn macht, können auch von derselben Hüllmittelart, z.B. Folie, verschiedene Versionen vorgesehen werden, die als Kombination eine bestimmte Wirkung erzielen. Sowohl Folie als auch Netz können als erstes wie auch als zweites Hüllmittel verwendet werden, da beide Oberflächeneigenschaften aufweisen, die es ermöglichen, ein anderes Hüllmittel mitzunehmen. Unter besonderen Verhältnissen kann es sogar angebracht sein, drei Rollen vorzugsweise mit unterschiedlichem Hüllmittel vorzusehen, die wahlweise miteinander verbunden werden können.

Die Verbindung der verschiedenen Hüllmittel zum Zweck des Transports kann auf verschiedene Weisen erfolgen, z.B. mechanisch, pneumatisch, oder dergleichen. In technisch einfacher Weise wird ein Anleger verwendet, der das stromaufwärts gelegene an das stromabwärts gelegene Hüllmittel andrückt und somit mit oder ohne Hilfsmittel miteinander verbindet. Ein solcher Anleger kann am einfachsten durch eine Schwenkbewegung in eine Anlagestellung gebracht werden.

Zwar ist es denkbar, den Anleger manuell und mechanisch an der Ballenpresse zu aktivieren, bevorzugt wird jedoch eine ferngesteuerte Betätigungsvorrichtung, die z.B. von einem Ackerschlepper aus bei Bedarf bedient wird.

Eine Ausbildung des Anlegers als ein bewegliches Blech, eine Rolle oder eine Stange ist kostengünstig möglich und technisch zuverlässig, wobei jeweils Hebel, Stellmotoren und dergleichen verwendet werden können, um die Bewegung hervorzurufen.

Die Verwendung des zweiten Hüllmittels kann sehr flexibel erfolgen, wenn es nicht nur mittels des Anlegers an das erste Hüllmittel anlegbar und mit diesem in die Ballenbildungskammer einführbar ist, sondern auch wieder von dem ersten Hüllmittel getrennt werden kann. Eine solche Trennung kann mit einem Messer wie auch mit einer Rückhaltevorrichtung erfolgen.

In der Zeichnung ist ein nachfolgend näher beschriebenes Ausführungsbeispiel der Erfindung dargestellt. Es zeigt:
- Fig. 1: eine Rundballenpresse in Seitenansicht mit einer Hüllmittelvorrichtung in einem Wartezustand,

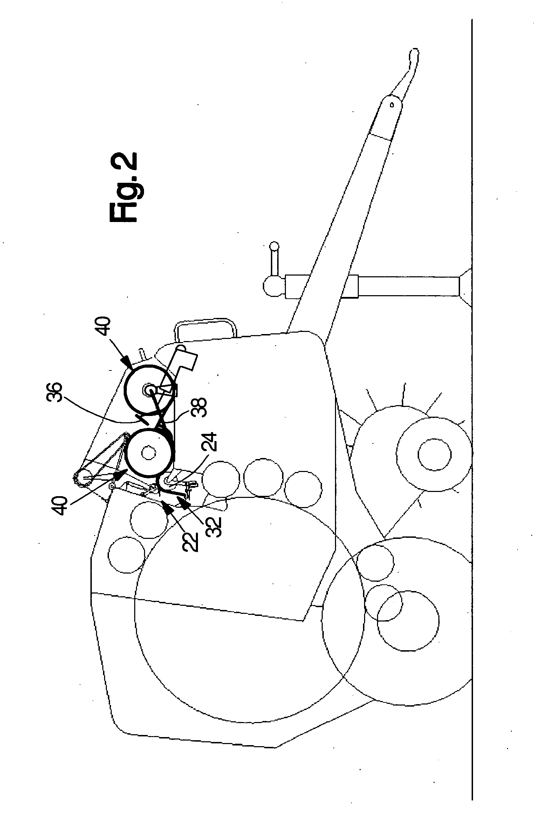

- Fig. 2: die Rundballenpresse nach Figur 1 in einem Zustand, in dem Hüllmittel an ein anderes Hüllmittel zum Zweck der Zufuhr in eine Ballenbildungskammer angelegt wird und

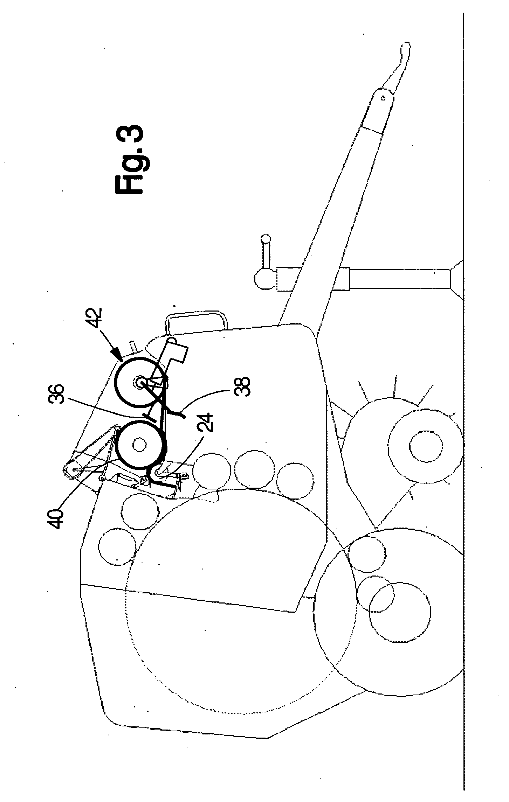

- Fig. 3: die Rundballenpresse nach Figur 1, nachdem beide Hüllmittel getrennt wurden.

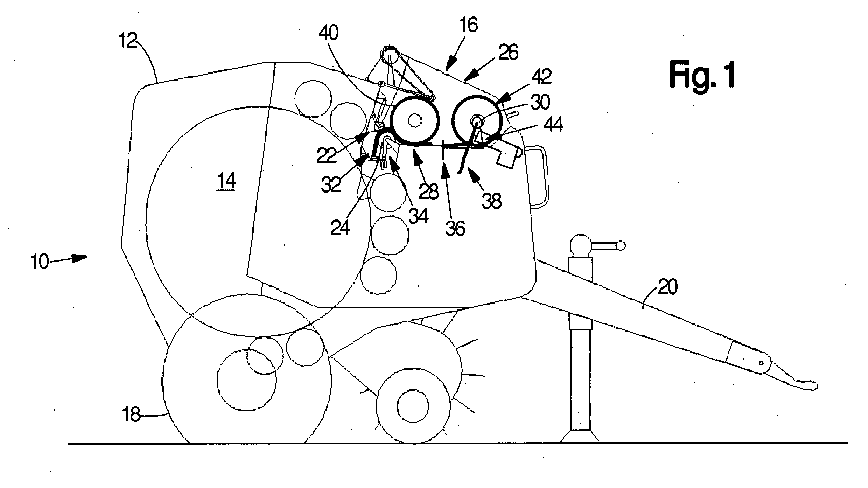

Figur 1 zeigt eine Rundballenpresse 10 mit einem Rahmen 12, einer Ballenbildungskammer 14 und einer Umhüllungsvorrichtung 16.

Die Rundballenpresse 10 ist als eine sogenannte Festkammerpresse ausgebildet, kann aber von jeglicher bekannter Bauart sein und dient dem Pressen von landwirtschaftlichen oder industriellen Gütern.

Der Rahmen 12 stützt sich über Räder 18 auf dem Boden ab und wird mittels einer Deichsel 20 an ein Zugfahrzeug angeschlossen; er trägt die Wände der Ballenbildungskammer, eine Pick-Up und alle weiteren erforderlichen Komponenten der Rundballenpresse 10.

Die Ballenbildungskammer 14 ist von bekannter Art und weist in einem vorderen oberen Bereich einen Einlaß 22 für Hüllmittel auf, was weiter unten näher beschrieben wird. Der Einlaß 22 könnte sich auch an einer anderen Stelle befinden.

Die Umhüllungsvorrichtung 16 ist im Wesentlichen ausgebildet, wie es z.B. in der EP 1 344 448 beschrieben ist. In diesem Ausführungsbeispiel sind eine Ablage 26, ein erster Träger 28, ein zweiter Träger 30, eine Zuführvorrichtung 32, eine erste Trennvorrichtung 34, eine zweite Trennvorrichtung 36 und ein Anleger 38 vorgesehen.

Die Ablage 26 wird von einem Gehäuse oder dergleichen gebildet und befindet sich angrenzend an den Einlaß 22 in einem vorderen, oberen und zugänglichen Bereich der Rundballenpresse. Die Ablage 26 ist dazu bestimmt, eine Rolle mit erstem Hüllmittel 40 und eine Rolle mit zweitem Hüllmittel 42 aufzunehmen.

Der erste Träger 28 befindet sich an dem Einlaß 22 und wird von einer Bodenfläche, einer Wanne oder dergleichen gebildet, könnte aber auch eine gegebenenfalls abbremsbare Welle oder dergleichen enthalten. Auf dem Träger 28 ist die Rolle mit dem ersten Hüllmittel 40 drehbar gehalten.

Der zweite Träger 30 wird von einer quer zur Fahrtrichtung verlaufenden Welle gebildet, auf der die Rolle mit dem zweiten Hüllmittel 42 gelagert ist. Der zweite Träger 30 könnte wie der erste Träger 28, d.h. als eine tragende Bodenfläche, ausgebildet sein, vorausgesetzt, die Rolle wird gegen Wegrollen gesichert. Der zweite Träger 30 ist so ausgebildet, dass die auf ihm gelagerte Rolle mit dem zweiten Hüllmittel 42 gegen freies Drehen gebremst wird und leicht ausgewechselt werden kann. Anstatt einer könnten auch zwei Zuführrollen verwendet werden.

Die Zuführvorrichtung 32 enthält eine Zuführrolle 42, die zur Einleitung des Hüllvorgangs antreibbar ist und eine Überholkupplung aufweist, die wirkt, sobald das Hüllmittel 40, 42 von dem Ballen in die Ballenbildungskammer 14 eingezogen wird. Die Mitnahme zumindest des ersten Hüllmittels 40 durch die Zuführrolle 42 erfolgt dadurch, dass die Rolle mit dem ersten Hüllmittel 40 an diese angedrückt wird. Die Zuführrolle 42 befindet sich zwischen der Rolle mit dem ersten Hüllmittel 40 einerseits und dem Einlaß 22 andererseits.

Die erste Trennvorrichtung 34 besteht aus einem Messer, einer Zahnleiste oder dergleichen, das in üblicher Weise bei Betätigung an einen Amboß oder an eine Gegenschneide anlegbar ist. Die Trennvorrichtung 34 enthält auch eine nicht gezeigte Bremsvorrichtung, mit der die Rolle angehalten wird, sobald der Trennvorgang erfolgt, um zu vermeiden, dass die Rolle nachdreht. Die erste Trennvorrichtung 34 wird betätigt, wenn der Umhüllungsvorgang beendet ist und trennt sowohl das erste wie auch das zweite Hüllmittel 40, 42, sofern letzteres mit zugeführt worden ist.

Die zweite Trennvorrichtung 36 ist nur wahlweise vorgesehen, und zwar dann, wenn es möglich sein soll, die Zuführung des zweiten Hüllmittels 42 zu unterbinden; dies verhindert, dass eine Bedienungsperson das zweite Hüllmittel 42 manuell von dem ersten Hüllmittel 40 trennen muß. Die zweite Trennvorrichtung 36, einschließlich einer ebenfalls nicht gezeigten Bremsvorrichtung, funktioniert auf die gleiche Weise wie die erste Trennvorrichtung 34, wird aber nicht betätigt, wenn der Ballen gebunden werden soll, sondern nur, wenn die Zuführung des zweiten Hüllmittels 42 beendet werden soll. Ein nicht näher bezeichnetes Messer oder dergleichen der zweiten Trennvorrichtung 36 ist vorzugsweise um die Mittenachse der Rolle des zweiten Hüllmittels 42 mittels eines fernsteuerbaren Motors schwenkbar.

Der Anleger 38 ist wie die zweite Trennvorrichtung 36 um die Mittenachse der Rolle mit dem zweiten Hüllmittel 42 schwenkbar, was allerdings auch anders gelöst werden könnte. Der Anleger 38 wird mittels einer Betätigungsvorrichtung 44 verstellt, die in diesem Fall als ein Elektromotor ausgebildet ist und von dem Zugfahrzeug aus gesteuert werden kann. Alternativ könnte auch ein Gestänge, ein Seil, ein Hydraulikmotor oder dergleichen verwendet werden. Der Anlager 38 ist so ausgebildet, in diesem Fall mit einer Anlageplatte, dass er das zweite Hüllmittel 42 an die Mantelfläche der Rolle mit dem ersten Hüllmittel 40 andrückt und es in Eingriff mit diesem bringt, so dass das erste Hüllmittel 40 das zweite Hüllmittel 42 mitzieht. Der Anleger 38 bewegt sich in dem Zwischenraum zwischen der Rolle mit dem ersten und dem zweiten Hüllmittel 40 und 42.

Das erste Hüllmittel 40 ist auf die dem Einlaß 22 zugelegene Rolle aufgewickelt und in den meisten Fällen als Netz ausgebildet. Hingegen ist das zweite Hüllmittel 42 auf die dem Einlaß 22 abgelegene Rolle aufgewickelt und in den meisten Fällen als Folie ausgebildet. Auf diese Weise kann der Ballen z.B. schnell mit einem Netz gebunden und zusätzlich mit Folie gegen Wasser geschützt werden. Es könnten aber auch beide Hüllmittel 40, 42 als Folie ausgebildet werden, was den Vorteil hat, dass bei Silage schneller eine luftdichte Umhüllung erreicht wird. Es wäre auch denkbar, Garn als erstes Hüllmittel 40 und Folie als zweites Hüllmittel 42 zu benutzen, wobei das Garn den Ballen bindet und die Folie für Schutz oder Luftdichtheit sorgt. Wenn beide Hüllmittel 40, 42 als Netz ausgebildet sind, besteht die Möglichkeit, an das Ende des ersten Hüllmittels 40 den Anfang des zweiten Hüllmittels 42 anzuheften, so dass die Rundballenpresse 10 länger im Einsatz bleiben kann.

## Patentansprüche

1. Umhüllungsvorrichtung (16) in einer Rundballenpresse (10) mit einem ersten Hüllmittel (40) und wenigstens einem zweiten Hüllmittel (42), die wenigstens während eines Teils eines Umhüllungszyklus zusammen in eine Ballenbildungskammer (14) eingespeist werden, **dadurch gekennzeichnet, dass** das erste und das zweite Hüllmittel (40,42) miteinander verbindbar und zusammen zur Ballenbildungskammer (14) förderbar sind.

2. Umhüllungsvorrichtung nach Anspruch 1, **dadurch gekennzeichnet, dass** die Hüllmittel (40, 42) mittels derselben Zuführvorrichtung (32) zugeführt werden.

3. Umhüllungsvorrichtung nach Anspruch 1 oder 2, **dadurch gekennzeichnet, dass** das erste Hüllmittel (40) als Folie oder Netz und das zweite Hüllmittel (42) entweder als Garn oder als Folie einer anderen Art oder als Netz ausgebildet ist.

4. Umhüllungsvorrichtung nach einem oder mehreren der vorherigen Ansprüche, **gekennzeichnet durch** einen Anleger (38), der das erste oder das zweite Hüllmittel (40 oder 42) an das zweite oder erste Hüllmittel (42 oder 40) anlegt.

5. Umhüllungsvorrichtung nach Anspruch 4, **dadurch gekennzeichnet, dass** der Anleger (38) von einer ferngesteuerten Betätigungsvorrichtung (44) gesteuert wird.

6. Umhüllungsvorrichtung nach Anspruch 4 oder 5, **dadurch gekennzeichnet, dass** der Anleger (38) als ein bewegliches Blech, eine Rolle oder eine Stange ausgebildet ist.

7. Umhüllungsvorrichtung nach einem oder mehreren der vorherigen Ansprüche, **dadurch gekennzeichnet, dass** dem zweiten Hüllmittel (42) eine Trennvorrichtung (36) zugeordnet ist.

## Claims

1. Wrapping device (16) in a round bale press (10), having a first wrapping means (40) and at least a second wrapping means (42) which are together fed into a bale forming chamber (14) during at least part of a wrapping cycle, **characterized in that** the first and the second wrapping means (40, 42) may be connected to one another and conveyed to the bale forming chamber (14) together.

2. Wrapping device according to Claim 1, **characterized in that** the wrapping means (40, 42) are supplied by means of the same supply device (32).

3. Wrapping device according to Claim 1 or 2, **characterized in that** the first wrapping means (40) is in the form of a film or netting and the second wrapping means (42) is in the form either of a twine or film of another type or of a netting.

4. Wrapping device according to one or more of the preceding claims, **characterized by** an abutment means (38) which presses the first or the second wrapping means (40 or 42) against the second or first wrapping means (42 or 40).

5. Wrapping device according to Claim 4, **characterized in that** the abutment means (38) is controlled by a remote-controlled actuation device (44).

6. Wrapping device according to Claim 4 or 5, **characterized in that** the abutment means (38) is constructed as a movable metal plate, a roll or a rod.

7. Wrapping device according to one of more of the preceding claims, **characterized in that** a dividing device (36) is associated with the second wrapping means (42).

## Revendications

1. Dispositif d'enveloppement (16) dans une presse à balles rondes (10), comprenant un premier moyen d'enveloppement (40) et au moins un deuxième moyen d'enveloppement (42), qui sont introduits au moins pendant une partie d'un cycle d'enveloppement conjointement dans une chambre de formation de balles (14), **caractérisé en ce que** le premier et le deuxième moyen d'enveloppement (40, 42) peuvent être connectés l'un à l'autre et peuvent être transportés ensemble jusqu'à la chambre de formation de balles (14).

2. Dispositif d'enveloppement selon la revendication 1, **caractérisé en ce que** les moyens d'enveloppement (40, 42) sont acheminés au moyen du même dispositif d'alimentation (32).

3. Dispositif d'enveloppement selon la revendication 1 ou 2, **caractérisé en ce que** le premier moyen d'enveloppement (40) est réalisé sous forme de film ou de filet et le deuxième moyen d'enveloppement (42) est réalisé soit sous forme de fil ou de film d'un autre type ou sous forme de filet.

4. Dispositif d'enveloppement selon l'une quelconque ou plusieurs des revendications précédentes, **caractérisé par** un margeur (38) qui applique le premier ou le deuxième moyen d'enveloppement (40 ou 42) contre le deuxième ou le premier moyen d'enveloppement (42 ou 40).

5. Dispositif d'enveloppement selon la revendication 4, **caractérisé en ce que** le margeur (38) est commandé par un dispositif d'actionnement (44) télécommandé.

6. Dispositif d'enveloppement selon la revendication 4 ou 5, **caractérisé en ce que** le margeur (38) est réalisé sous forme de tôle mobile, de rouleau ou de barre.

7. Dispositif d'enveloppement selon l'une quelconque ou plusieurs des revendications précédentes, **caractérisé en ce que** l'on associe au deuxième moyen d'enveloppement (42) un dispositif de séparation (36).
